# EUROPEAN PATENT APPLICATION

(11) **EP 4 404 057 A1**
(43) Date of publication of application: **24.07.2024**
(21) Application number: 22882750.7
(22) Date of filing: 14.10.2022
(51) Int. Cl.: G06F 9/48

(54) **METHOD AND APPARATUS FOR OBTAINING LOCK RESOURCES, AND DEVICE**

(30) Priority: 21.10.2021 CN 202111227144
(71) Applicant: Huawei Technologies Co., Ltd., Shenzhen, Guangdong 518129 (CN)
(72) Inventor: LIU, Nian, Shanghai 200240 (CN); WU, Mingyu, Shanghai 200240 (CN); CHEN, Haibo, Shenzhen, Guangdong 518129 (CN); GUO, Hanjun, Shenzhen, Guangdong 518129 (CN)
(74) Representative: Thun, Clemens
(86) International application number: PCT/CN2022/125241
(87) International publication number: WO 2023/066141

(57) **Abstract**

Embodiments of this application disclose a method and an apparatus for obtaining a lock resource, and a device. The method is applied to a computer device whose processor includes a first core and a second core, and specifically includes: A first code segment is run by using a first thread running on the first core, and in the running process, the first thread determines that a priority of the first core is lower than a priority of the second core; and the first thread delays joining a waiting queue when the waiting queue is not empty. In this way, a second thread running on the second core may join the waiting queue before the first thread, to obtain the lock resource before the first thread. This reduces a waiting time of the second thread, and improves a throughput rate of the processor

## Description

This application claims priority to Chinese Patent Application No. CN202111227144.7, filed with the China National Intellectual Property Administration on October 21, 2021 and entitled "METHOD AND APPARATUS FOR OBTAINING LOCK RESOURCE, AND DEVICE", which is incorporated herein by reference in its entirety.

### TECHNICAL FIELD

Embodiments of this application relate to the field of computer technologies, and in particular, to a method and an apparatus for obtaining a lock resource, and a device.

### BACKGROUND

A mutex lock is a common synchronization primitive. It is used to provide mutex access assurance for a multithreaded application. When a plurality of threads need to modify shared data (for example, a same entry in a database), these threads need to contend with each other to obtain the mutex lock. At a same moment, only one thread that obtains the mutex lock can modify the shared data. If the mutex lock is obtained by a thread, other threads that need to contend for the mutex lock can only enter a sleep state.

Currently, there are other methods for obtaining the mutex lock.

For example, if the mutex lock is obtained by a thread, other threads that need to contend for the mutex lock do not enter the sleep state. The threads cyclically detect whether the mutex lock is released. After the mutex lock is released, the threads contend for the mutex lock. A mutex lock obtained by using this method is also referred to as a spinlock.

However, in the cyclical detection process, some new threads may be further added. After the spinlock is released, the newly added threads contend for the spinlock with the previous threads that continuously and cyclically detect whether the spinlock is released. That is, unfairness is caused between the newly added threads and the previous threads that continuously and cyclically detect whether the spinlock is released.

To ensure fairness between the plurality of threads contending for a lock, a queue lock is introduced. The queue lock maintains a first-in first-out waiting queue. Each thread that needs to obtain the mutex lock needs to join the waiting queue first, and a thread that first joins the waiting queue obtains the mutex lock first.

A heterogeneous multiprocessor (Asymmetric Multiprocessor, AMP) is used as an example. The heterogeneous multiprocessor may also be referred to as an asymmetric multiprocessor, and includes a plurality of cores (cores) of different sizes. A large core is usually a core with good performance, and a small core is usually a core with poor performance.

If a thread running on the small core needs to obtain the mutex lock, the thread running on the small core needs to join the waiting queue. Then, if a thread running on the large core needs to obtain the mutex lock, the thread running on the large core also needs to join the waiting queue. Because the thread running on the small core joins the waiting queue before the thread running on the large core, the thread running on the small core obtains the mutex lock first.

However, because the performance of the small core is poor, after the thread running on the small core obtains the mutex lock, a time for executing a critical section (a code section protected by the mutex lock) is long. This causes a long waiting time of the thread running on the large core, and causes a decrease in a throughput rate of a processor.

### SUMMARY

Embodiments of this application provide a method and an apparatus for obtaining a lock resource, and a device. According to the method, a second thread running on a second core with a high priority can join a waiting queue before a first thread running on a first core with a low priority, so that the second thread preferentially obtains the lock resource. This reduces a waiting time of the second thread, and improves a throughput rate of a processor

According to a first aspect, an embodiment of this application provides a method for obtaining a lock resource, applied to a computer device, where a processor of the computer device includes a first core and a second core, and the first core and the second core correspond to different priorities. Based on this, the method includes: running a first code segment by using a first thread running on the first core, to perform the following first operation, where the first code segment is a segment of code in an application program: determining that a priority of the first core is lower than a priority of the second core, where there are a plurality of determining methods, for example, different priority identifiers are set for the first core and the second core, the first core corresponds to a low priority identifier, the second core corresponds to a high priority identifier. In this way, the first thread may determine, based on a priority identifier corresponding to the first core, that the priority of the first core is lower than the priority of the second core; and delaying joining a waiting queue when the waiting queue is not empty, so that a second thread running on the second core joins the waiting queue before the first thread, where the waiting queue is used to contend for the lock resource. Latency duration is not specifically limited in this embodiment of this application.

Because the priority of the first core is lower than the priority of the second core, when the waiting queue is not empty, the first thread running on the first core delays joining the waiting queue, so that the second thread running on the second core joins the waiting queue before the first thread. In this way, the second thread may preferentially obtain the lock resource, so that a critical section may be preferentially executed.

It may be learned that the lock resource is obtained according to the method provided in this embodiment of this application, so that a thread running on a core with a high priority may be prior to a thread running on a core with a low priority to execute the critical section. This reduces a waiting time of the thread running on the core with the high priority, and increases a quantity of times that the thread running on the core with the high priority executes the critical section. In addition, the core with the high priority is usually a core with good performance, duration of a thread running on the core with good performance executing the critical section is short, and duration of a thread running on the core with poor performance executing the critical section is long. Therefore, the quantity of times that the thread running on the core with the high priority executes the critical section is increased, and a total quantity of times of executing the critical section in a fixed time period can be increased. This improves a throughput rate.

In an implementation, the determining that a priority of the first core is lower than a priority of the second core includes: if performance of the second core is better than performance of the first core, determining that the priority of the first core is lower than the priority of the second core. Performance of a core may be determined by a plurality of parameters, for example, may be determined by parameters such as a frequency and a cache.

Because the performance of the second core is better than the performance of the first core, in this embodiment of this application, the waiting time of the thread running on the core with the high priority can be reduced, and the quantity of times that the thread running on the core with the high priority executes the critical section can be increased. In addition, because the duration of the thread running on the core with good performance executing the critical section is short, and duration of the thread running on the core with poor performance executing the critical section is long, the total quantity of times of executing the critical section in the fixed time period can be increased. This improves the throughput rate.

In an implementation, the delaying joining a waiting queue when the waiting queue is not empty includes: entering, by the first thread, a backoff state when the waiting queue is not empty, where the backoff state is a state of waiting to join the waiting queue; and joining the waiting queue if duration of entering the backoff state is greater than or equal to out-of-order duration.

Because the first thread joins the waiting queue when a waiting time is greater than or equal to the out-of-order duration, a waiting time of the first thread is not excessively long to affect normal running of the first code segment.

In an implementation, before the joining the waiting queue, the first operation further includes: obtaining the out-of-order duration. There are a plurality of methods for determining the out-of-order duration. This is not specifically limited in this embodiment of this application. For example, the out-of-order duration may be obtained based on whether the first code segment has a latency requirement.

After it is determined that a priority of the first core is lower than that of the second core, the out-of-order duration is obtained, and the waiting time of the first thread is controlled based on the out-of-order duration. Therefore, the waiting time of the first thread is not excessively long to affect normal running of the first code segment.

In an implementation, after it is determined that the priority of the first core is lower than that of the second core, the out-of-order duration is obtained based on a fact that the duration for entering the backoff state is greater than or equal to the out-of-order duration.

In an implementation, the obtaining the out-of-order duration includes: obtaining, if the first code segment has the latency requirement, first duration corresponding to the first code segment as the out-of-order duration, where the first duration is obtained based on the latency requirement. There are a plurality of methods for determining the first duration based on the latency requirement. For example, the first duration may be estimated based on a target latency specified by the latency requirement, and then the first duration is adjusted subsequently. The first duration is usually less than the target latency.

Because the first code segment has the latency requirement, the first duration is determined based on the latency requirement, and the first duration is used as the out-of-order duration, to avoid that running duration of the first code segment is excessively long due to excessively long out-of-order duration, and cannot meet the latency requirement.

In an implementation, the method further includes: before running the first code segment, performing the following second operation by using the first thread: setting a value of a global variable to a first identifier of the first code segment, where the global variable represents a code segment having a latency requirement; and before the obtaining, if the first code segment has the latency requirement, first duration corresponding to the first code segment as the out-of-order duration, the first operation further includes: if the value of the global variable is the first identifier, determining that the first code segment has the latency requirement.

In this implementation, the global variable is introduced to mark the first code segment having the latency requirement, and the value of the global variable is set to the first identifier of the first code segment before running the first code segment, so that the first thread can determine, based on the value of the global variable, that the first code segment has the latency requirement. A manner of marking the first code segment by using the global variable is simple and easy to implement.

In an implementation, the method further includes: after running the first code segment, performing the following third operation by using the first thread: setting the value of the global variable to a second identifier, where the second identifier does not identify any code segment.

Because the first thread can execute a plurality of code segments, if the value of the global variable is not set to the second identifier, incorrect calculation of the out-of-order duration may be caused. For example, there is no latency requirement for a next code segment of the first code segment. If the value of the global variable is not set to the second identifier, the value of the global variable is still the first identifier. In this way, in a process of running the next code segment by using the first thread, the first duration corresponding to the first code segment is incorrectly used as the out-of-order duration. Therefore, the value of the global variable is set to the second identifier, so that a calculation error of the out-of-order duration can be prevented.

In an implementation, the method further includes: after running the first code segment, performing the following third operation by using the first thread: obtaining actual running duration of the first code segment, where specifically, when running the first code segment, a timestamp at which the first code segment starts to run may be recorded, when running of the first code segment ends, a timestamp at which the first code segment ends to run is obtained, and the actual running duration of the first code segment may be calculated based on the timestamp at which the first code segment starts to run and the timestamp at which the running ends; and adjusting the first duration based on a comparison between the actual running duration and the target latency specified by the latency requirement. There may be a plurality of methods for adjusting the first duration.

The first duration is obtained based on the latency requirement, but the first duration may not be accurate enough. For example, the first duration is short, so that the actual running duration of the first code segment is far less than the latency requirement, or the first duration is long, so that the actual running duration of the first code segment is far greater than the latency requirement. Therefore, the first duration is adjusted based on a comparison between the actual running duration of the first code segment and the target latency specified by the latency requirement, so that the latency requirement of the first code segment is met when the first thread is delayed to join.

In an implementation, the adjusting the first duration based on a comparison between the actual running duration and the target latency includes: shortening the first duration if the actual running duration is greater than the target latency. A shortening amplitude may be adjusted based on an actual requirement.

The first duration is shortened if the actual running duration is greater than the target latency, so that the actual running duration of the first code segment can be less than the target latency. Therefore, the latency requirement of the first code segment is met when the first thread is delayed to join.

In an implementation, the adjusting the first duration based on a comparison between the actual running duration and the target latency includes: extending the first duration if the actual running duration is less than the target latency.

The first duration is extended if the actual running duration is less than the target latency, so that the duration in which the first thread is in the backoff state is extended as much as possible when the latency requirement of the first code segment is met. The second thread preferentially joins the waiting queue as much as possible, to improve the throughput rate.

In an implementation, the obtaining the out-of-order duration includes: obtaining second duration as the out-of-order duration if the first code segment has no latency requirement.

Because the first code segment has no latency requirement, the second duration is usually long. The second duration is obtained as the out-of-order duration, so that the first thread can be delayed to join the waiting queue.

In an implementation, after fixed second duration is used as the out-of-order duration if the first code segment has no latency requirement, the first operation further includes: if a value of a global variable is a second identifier, determining that the first code segment has no latency requirement, where the global variable represents a code segment having a latency requirement, and the second identifier does not identify any code segment. The second identifier does not identify any code segment, or may be understood as that there is no code segment having a latency requirement currently.

In this implementation, the global variable is introduced to mark the first code segment having the latency requirement. In this way, it can be determined, based on a fact that the value of the global variable is the second identifier, that the first code segment has no latency requirement. This manner of marking the first code segment by using the global variable is simple and easy to implement.

In an implementation, the delaying joining a waiting queue when the waiting queue is not empty further includes: detecting the waiting queue if the duration of entering the backoff state is less than the out-of-order duration; and joining the waiting queue when the waiting queue is empty.

The detecting the waiting queue if the duration of entering the backoff state is less than the out-of-order duration; and joining the waiting queue when the waiting queue is empty can prevent the first thread from being in the backoff state when the waiting queue is empty, so that the lock resource can be maximized, and a throughput can be improved.

In an implementation, after the determining that a priority of the first core is lower than that of the second core, the first operation further includes: joining the waiting queue when the waiting queue is empty.

The joining the waiting queue when the waiting queue is empty can prevent the first thread from being in the backoff state when the waiting queue is empty, so that the lock resource can be maximized, and the throughput can be improved.

According to a second aspect, an embodiment of this application provides an apparatus for obtaining a lock resource, applied to a computer device, where a processor of the computer device includes a first core and a second core; and the apparatus includes: A determining unit is configured to determine that a priority of the first core is lower than a priority of a second core; and a queue joining unit is configured to delay joining a waiting queue when the waiting queue is not empty, so that a second thread running on the second core joins the waiting queue before a first thread, where the waiting queue is used to contend for the lock resource.

In an implementation, if performance of the second core is better than performance of the first core, the determining unit is configured to determine that the priority of the first core is lower than the priority of the second core.

In an implementation, the queue joining unit is configured to: enter, by the first thread, a backoff state when the waiting queue is not empty, where the backoff state is a state of waiting to join the waiting queue; and join the waiting queue if duration of entering the backoff state is greater than or equal to out-of-order duration.

In an implementation, the queue joining unit is configured to obtain the out-of-order duration.

In an implementation, the queue joining unit is configured to obtain first duration corresponding to the first code segment as the out-of-order duration if the first code segment has a latency requirement, where the first duration is obtained based on the latency requirement.

In an implementation, the apparatus further includes: A first setting unit is configured to set a value of a global variable to a first identifier of the first code segment, where the global variable represents a code segment having a latency requirement; and if the value of the global variable is the first identifier, the queue joining unit is further configured to determine that the first code segment has the latency requirement.

In an implementation, the apparatus further includes: A second setting unit is configured to set the value of the global variable to a second identifier, where the second identifier does not identify any code segment.

In an implementation, the apparatus further includes: An adjustment unit is configured to: obtain actual running duration of the first code segment; and adjust the first duration based on a comparison between the actual running duration and a target latency specified by the latency requirement.

In an implementation, the adjustment unit is configured to shorten the first duration if the actual running duration is greater than the target latency.

In an implementation, the adjustment unit is configured to extend the first duration if the actual running duration is less than the target latency.

In an implementation, the queue joining unit is configured to obtain second duration as the out-of-order duration if the first code segment has no latency requirement.

In an implementation, if a value of a global variable is a second identifier, the queue joining unit is configured to determine that the first code segment has no latency requirement, where the global variable represents a code segment having a latency requirement, and the second identifier does not identify any code segment.

In an implementation, the queue joining unit is configured to: detect the waiting queue if the duration of entering the backoff state is less than the out-of-order duration; and join the waiting queue when the waiting queue is empty.

In an implementation, the queue joining unit is configured to join the waiting queue when the waiting queue is empty.

For specific implementations, related descriptions, and technical effects of the foregoing units, refer to descriptions in the first aspect of embodiments of this application.

A third aspect of embodiments of this application provides a computer device. The computer device includes a memory and a processor, where the memory is configured to store computer-readable instructions (or referred to as a computer program), and the processor is configured to read the computer-readable instructions to implement the method provided in any one of the foregoing implementations.

A fourth aspect of embodiments of this application provides a computer program product including instructions. When the computer program product runs on a computer, the computer is enabled to perform the method according to any one of the first aspect and the possible implementations.

A fifth aspect of embodiments of this application provides a computer-readable storage medium including instructions. When the instructions are run on a computer, the computer is enabled to perform the method according to any one of the first aspect and the possible implementations.

A sixth aspect of embodiments of this application provides a chip. The chip includes one or more processors. Apart or all of the processors are configured to read and execute a computer program stored in a memory, to perform the method according to any one of the possible implementations of the first aspect.

Optionally, the chip includes the memory, and the memory is connected to the processor by using a circuit or a wire. Further, optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method by using dedicated hardware. For example, processing related to a neural network model may be implemented by a dedicated neural network processor or graphics processing unit.

The method provided in embodiments of this application may be implemented by one chip, or may be cooperatively implemented by a plurality of chips.

### BRIEF DESCRIPTION OF DRAWINGS

FIG. 1 is a schematic diagram of cores of a computer device according to an embodiment of this application;
FIG. 2 is a schematic diagram of a first embodiment of a method for obtaining a lock resource according to an embodiment of this application;
FIG. 3 is a schematic diagram of a second embodiment of a method for obtaining a lock resource according to an embodiment of this application;
FIG. 4 is a schematic flowchart of an embodiment of obtaining out-of-order duration according to an embodiment of this application;
FIG. 5 is a schematic diagram of a third embodiment of a method for obtaining a lock resource according to an embodiment of this application;
FIG. 6 is a schematic flowchart of another embodiment of obtaining out-of-order duration according to an embodiment of this application;
FIG. 7 shows a process in which a first thread joins a waiting queue according to an embodiment of this application;
FIG. 8 is a schematic diagram of adding an out-of-order lock to an application program according to an embodiment of this application;
FIG. 9 is a schematic diagram of a first thread joining a waiting queue according to an embodiment of this application;
FIG. 10 is a schematic diagram of a comparison between a throughput rate of a target library and a throughput rate of using another lock;
FIG. 11 is a schematic diagram of a latency change of an epoch according to an embodiment of this application;
FIG. 12 is a schematic diagram of an apparatus for obtaining a lock resource according to an embodiment of this application; and
FIG. 13 is a schematic diagram of a structure of a computer device according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may learn that, with technology development and emergence of a new scenario, the technical solutions provided in embodiments of this application are also applicable to a similar technical problem.

In the specification, claims, and the accompanying drawings of this application, terms "first", "second", and the like are intended to distinguish similar objects but do not necessarily indicate a specific order or sequence. It should be understood that the data termed in such a way are interchangeable in proper circumstances, so that embodiments described herein can be implemented in other orders than the order illustrated or described herein. In addition, terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved.

In addition, in the descriptions of the present invention, unless otherwise specified, "a plurality of" means two or more than two. In this application, a term "and/or" or a character "/" describes only an association relationship between associated objects, and indicates that three relationships may exist. For example, A and/or B, or A/B may indicate the following three cases: A exists alone, both A and B exist, and B exists alone.

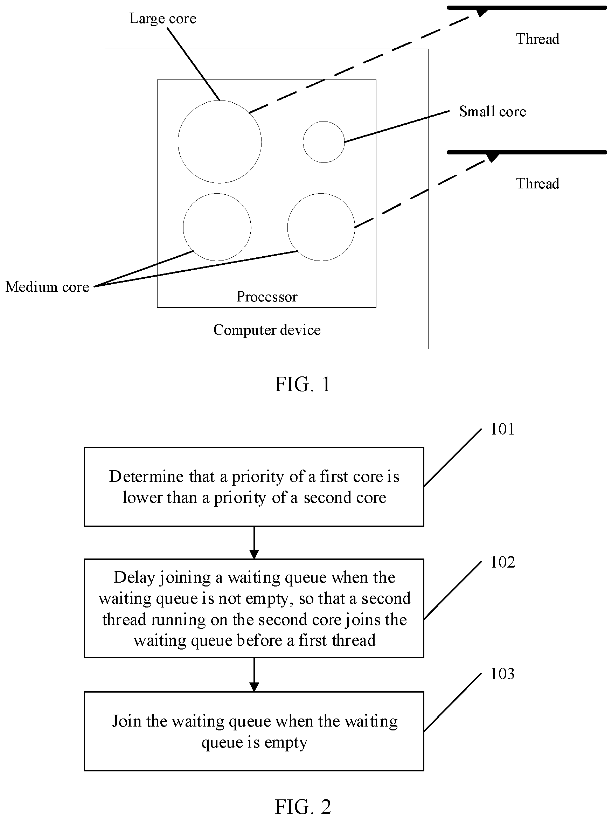

Embodiments of this application may be applied to a computer device shown in FIG. 1. A processor in the computer device includes a plurality of cores (cores) of different sizes. It should be noted that a size of the core is a relative size of the core. A large core may be a core with good performance, and a small core may be a core with poor performance.

Specifically, FIG. 1 shows four cores, and the four cores include one core A, two cores B, and one core C.

In FIG. 1, a size of a circle represents the size of the core. It may be learned from FIG. 1 that, the core A is greater than the core B, and specifically, performance of the core A is better than performance of the core B. The core B is greater than the core C, and specifically, performance of the core B is better than performance of a small core C.

Compared with the core A in FIG. 1, the core B in FIG. 1 may be considered as a small core. Compared with the core B in FIG. 1, the core C in FIG. 1 may also be considered as a small core.

It may be understood that when a plurality of threads need to modify shared data, the plurality of threads need to obtain, through contention, a lock for protecting the shared data.

There are a plurality of types of locks, for example, a spinlock and a queue lock.

However, the spinlock may cause a problem of unfairness between threads, and the queue lock may ensure fairness between the threads, but may cause a decrease in a throughput rate.

The following uses the core A and the core B in FIG. 1 as an example for description.

It is assumed that a lock is occupied by a thread. In a period of time before the lock is released, a thread 1, a thread 2, a thread 3, a thread 4, a thread 5, and a thread 6 sequentially request the lock based on a time sequence, the thread 1 and the thread 3 run on the core B, and the thread 2, the thread 4, the thread 5, and the thread 6 run on the core A.

If the occupied lock is a spinlock, regardless of the time sequence of requesting the lock, after the lock is released, the thread 1, the thread 2, the thread 3, the thread 4, the thread 5, and the thread 6 contend for the lock through an atomic operation. Specifically, the thread 1, the thread 2, the thread 3, the thread 4, the thread 5, and the thread 6 set a lock variable to a characteristic value (for example, 1), and if one of the threads successfully completes the setting, the thread obtains the spinlock. The atomic operation is an operation that is not interrupted by a thread scheduling mechanism.

Because the performance of the core A is better than the performance of the core B, a probability that the thread 2, the thread 4, the thread 5, and the thread 6 successfully perform the atomic operation is greater than a probability that the thread 1 and the thread 3 successfully perform the atomic operation. In this case, a probability that the thread 2, the thread 4, the thread 5, and the thread 6 obtain the spinlock through contention is greater than a probability that the thread 1 and the thread 3 obtain the spinlock through contention.

A final result of lock contention is as follows: The thread 2, the thread 4, the thread 5, the thread 6, and the thread 1 sequentially obtain the spinlock, but the thread 3 does not obtain the spinlock due to a limited time.

If the occupied lock is a queue lock, because the time sequence of requesting the lock is the thread 1, the thread 2, the thread 3, the thread 4, the thread 5, and the thread 6, a sequence of joining a waiting queue is also the thread 1, the thread 2, the thread 3, the thread 4, the thread 5, and the thread 6.

It should be noted that, after the thread obtains the lock through contention, the thread needs to execute a critical section (a code section protected by the lock) to modify the shared data, and only a thread that obtains the queue lock through contention can enter the critical section.

Because the performance of the core B is poor, after the thread 1 and the thread 3 obtain the queue lock through contention, a time for executing the critical section is long. However, due to a limited time, the final result of lock contention is that the thread 1, the thread 2, the thread 3, and the thread 4 sequentially obtain the queue lock, and the thread 5 and the thread 6 do not obtain the queue lock within the limited time.

It may be learned from the foregoing descriptions that, in a same time period, if the occupied lock is a queue lock, four threads each execute the critical section once by using the queue lock; and if the occupied lock is a spinlock, five threads each execute the critical section once by using the spinlock. Therefore, a quantity of times of executing the critical section by using the queue lock is less than a quantity of times of executing the critical section by using the spinlock, that is, the queue lock causes the decrease in the throughput rate. The throughput rate may be understood as a service amount provided in a unit time.

The queue lock described above may also be referred to as an FIFO ticket spinlock (FIFO Ticket Spinlock), and is referred to as an FIFO lock for short. The FIFO lock may be understood as a new spinlock.

Therefore, an embodiment of this application provides a method for obtaining a lock resource. In the method, an existing FIFO lock is used. However, before joining a waiting queue, a priority of a core on which a thread runs is determined first. When the priority of the core is low, the thread is delayed to join the waiting queue. In this way, before the thread joins the waiting queue, a thread running on a core with a high priority may join the waiting queue first. Therefore, even if the thread running on the core with the high priority requests the lock resource later than the thread running on the core with the low priority, the thread running on the core with the high priority can preferentially obtain the lock resource. The lock resource may also be referred to as a lock for short.

Therefore, in this embodiment of this application, a time for obtaining the lock resource by the thread running on the core with the high priority can be reduced. When the core with the high priority is a core with good performance, it means that the thread running on the core with the high priority may preferentially obtain the lock resource and execute a critical section, and a time for executing the critical section by the thread running on the core with the high priority is short. Therefore, a quantity of times of executing the critical section within a specific time can be increased, thereby improving a throughput rate.

It should be noted that, in this embodiment of this application, even if the thread running on the core with the high priority contends for the lock resource later than the thread running on the core with the low priority, the thread running on the core with the high priority can still join the waiting queue and obtain the lock resource earlier than the thread running on the core with the low priority. Therefore, the lock in embodiments of this application may be considered as a new FIFO lock. In embodiments of this application, the new FIFO lock is referred to as an out-of-order lock.

The following describes in detail the method provided in this embodiment of this application.

As shown in FIG. 2, an embodiment of this application provides a first embodiment of a method for obtaining a lock resource. The first embodiment is applied to a computer device. A processor of the computer device includes a plurality of cores. A specific quantity of cores is not limited in this embodiment of this application. For example, the quantity of cores may be 2, 3, or more than 3.

The plurality of cores correspond to a plurality of priorities, and there are a plurality of priority division methods. This is not specifically limited in this embodiment of this application. Usually, priority division may be performed on the plurality of cores based on performance of the cores.

The four cores in FIG. 1 are used as an example. The four cores may be divided into three priorities based on the performance of the cores. Specifically, the core A corresponds to a first priority, the core B corresponds to a second priority, and the core C corresponds to a third priority.

Alternatively, the four cores may be divided into two priorities based on the performance of the cores. Specifically, the core A corresponds to a first priority, and the core B and the core C both correspond to a second priority; or the core A and the core B correspond to a first priority, and the core C corresponds to a second priority.

Usually, the plurality of cores can be divided into two priorities.

For ease of description, the following uses a first core and a second core in the plurality of cores as an example, to describe the method provided in this embodiment of this application.

Specifically, the method includes:
running a first code segment by using a first thread running on the first core, to perform a first operation, where the first code segment is a segment of code in an application program, and the segment of code may be specifically used to process a request.

It should be noted that a plurality of code segments may be run by using the first thread, and the first code segment may be any one of the plurality of code segments.

The first operation includes:
Step 101: Determine that a priority of the first core is lower than a priority of the second core.

Based on the foregoing description, it may be learned that a priority of a core is usually divided based on performance of the core. Correspondingly, step 101 may include: if performance of the second core is better than performance of the first core, determining that the priority of the first core is lower than that of the second core.

Specifically, the first core and the second core may be divided into corresponding priorities in advance, and different priority identifiers are set for the first core and the second core based on the different priorities. In this way, the first thread may determine, based on a priority identifier corresponding to the first core, that the priority of the first core is lower than the priority of the second core.

For example, the priority identifier of the first core is AA, and a priority identifier of the second core is BB. A priority represented by AA is lower than a priority represented by BB. When determining that the priority of the first core is AA instead of BB, the first thread may determine that the priority of the first core is lower than the priority of the second core.

Step 102: Delay joining a waiting queue when the waiting queue is not empty, so that a second thread running on the second core joins the waiting queue before the first thread, where the waiting queue is used to contend for the lock resource.

The delaying joining the waiting queue may be understood as: When it is determined that the waiting queue is not empty, do not join the waiting queue immediately, but wait for a period of time and then join the waiting queue. In this case, the second thread may join the waiting queue first within the waiting period of time.

It should be noted that there are a plurality of methods of delaying joining a queue. This is not specifically limited in this embodiment of this application. The following describes this in detail.

Because the waiting queue is described above, details are not described herein. In short, a thread that joins the waiting queue first obtains the lock resource first.

Step 103: Join the waiting queue when the waiting queue is empty.

It may be understood that, when the waiting queue is empty, if the first thread does not join the waiting queue, the lock resource is wasted, and a decrease in a throughput rate is caused. Therefore, the throughput rate can be improved in step 103.

It should be noted that, when the plurality of cores correspond to two priorities, if it is determined that the priority of the first core is a higher priority, the first thread may directly join the waiting queue regardless of whether the waiting queue is empty.

In this embodiment of this application, because the priority of the first core is lower than the priority of the second core, when the waiting queue is not empty, the first thread running on the first core delays joining the waiting queue, so that the second thread running on the second core joins the waiting queue before the first thread. In this way, the second thread can preferentially obtain the lock resource, so that a critical section can be preferentially executed.

Based on this, the lock resource is obtained according to the method provided in this embodiment of this application, so that a thread running on a core with a high priority may be prior to a thread running on a core with a low priority to execute the critical section. This reduces a waiting time of the thread running on the core with the high priority, and increases a quantity of times that the thread running on the core with the high priority executes the critical section. In addition, the core with the high priority is usually a core with good performance, duration of a thread running on the core with good performance executing the critical section is short, and duration of a thread running on the core with poor performance executing the critical section is long. Therefore, the quantity of times that the thread running on the core with the high priority executes the critical section is increased, and a total quantity of times of executing the critical section in a fixed time period can be increased. This improves the throughput rate.

It may be learned from the related descriptions in step 102 that, joining the waiting queue is delayed when the waiting queue is not empty, and a length of a delay time may be set based on an actual requirement.

For example, a developer may have a latency requirement for running of some code segments. Based on this, for two cases in which the first code segment has a latency requirement and the first code segment has no latency requirement, different lengths of the latency time are set.

The following separately describes the method provided in embodiments of this application by using two cases: a first code segment has a latency requirement, and the first code segment has no latency requirement.

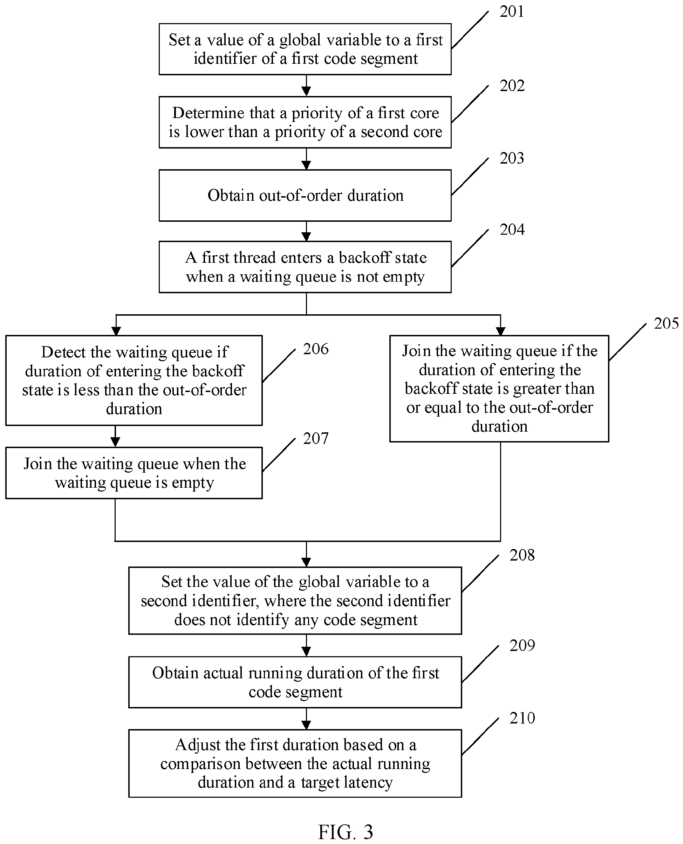

Herein, a case in which the first code segment has the latency requirement is described first. As shown in FIG. 3, an embodiment of this application provides a second embodiment of a method for obtaining a lock resource. The embodiment includes the following steps.

Step 201: Set a value of a global variable to a first identifier of the first code segment.

The global variable represents a code segment that has a latency requirement.

To facilitate determining that the first code segment has the latency requirement, a global variable is introduced in this embodiment. When a value of the global variable is a first identifier of the first code segment, it indicates that the first code segment has the latency requirement.

It may be learned from the foregoing description that a plurality of code segments may be run by using a first thread. To accurately determine a code segment having a latency requirement, each code segment corresponds to a globally unique identifier. Therefore, the first identifier is also globally unique.

Before step 201 is performed, an initial value of the global variable may be set. The initial value usually does not identify any code segment, and a specific value of the initial value may be set based on an actual requirement. For example, the initial value may be -1, and the initial value is also referred to as a second identifier in the following.

It should be noted that there are a plurality of methods for determining that the first code segment has the latency requirement, and introducing the global variable is merely one of the methods. Therefore, step 201 is optional.

In this embodiment, step 201 may be performed before running the first code segment. In this embodiment, an operation performed before running the first code segment is referred to as a second operation, and correspondingly, step 201 is included in the second operation.

After the second operation is performed, the first code segment is run by using a first thread, to perform a first operation (namely, step 202 to step 207), and a timestamp at which the first code segment starts to run is recorded. The timestamp is used to calculate actual running duration of the first code segment.

Step 202: Determine that a priority of a first core is lower than a priority of a second core.

Step 202 is similar to step 101. For details, refer to related descriptions of step 101 to understand step 202.

Step 203: Obtain out-of-order duration.

The out-of-order duration is duration in which the first thread and a second thread are allowed to join a waiting queue in a non-sequence manner, namely, duration in which the first thread delays joining a queue, or duration in which the first thread waits to join a queue.

Based on the foregoing description, the out-of-order duration may be determined based on whether the first code segment has the latency requirement. In this embodiment, the first code segment has the latency requirement.

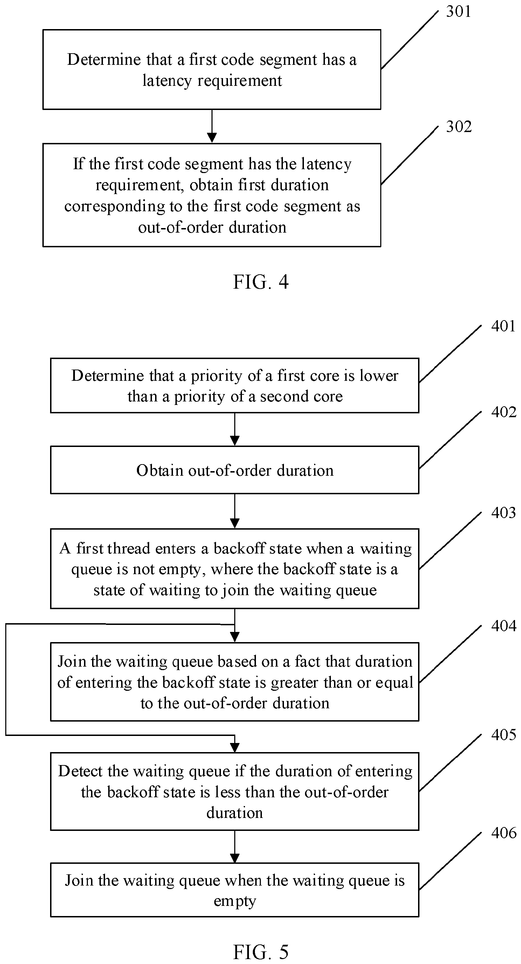

Therefore, in an implementation, as shown in FIG. 4, step 203 includes the following steps.

Step 301: Determine that the first code segment has the latency requirement.

There are a plurality of methods for determining that the first code segment has the latency requirement. This is not specifically limited in this embodiment of this application.

When step 201 is performed, step 301 may include:
if the value of the global variable is the first identifier, determining that the first code segment has the latency requirement.

Step 302: Obtain, if the first code segment has the latency requirement, first duration corresponding to the first code segment as out-of-order duration, where the first duration is obtained based on the latency requirement.

There are a plurality of methods for determining the first duration based on the latency requirement. This is not limited in this embodiment of this application.

For example, the first duration may be estimated based on a target latency specified by the latency requirement, and the first duration is subsequently adjusted.

It should be noted that the out-of-order duration is the duration in which the first thread waits to join the queue. In addition, it also takes time to execute another part of code in the first code segment by using the first thread. Therefore, the first duration is usually less than the target latency required by the latency requirement.

In this embodiment, the first duration may be dynamically adjusted.

Step 203 is performed before step 205. A sequence of step 203 and step 204 is not specifically limited in this embodiment of this application. Specifically, step 203 may be performed before step 204, or step 204 may be performed before step 203.

Step 204: The first thread enters a backoff state when the waiting queue is not empty, where the backoff state is a state of waiting to join the waiting queue.

In the backoff state, the first thread does not join the waiting queue.

It may be understood that, to calculate duration in which the first thread enters the backoff state, when the first thread enters the backoff state, a timestamp of entering the backoff state may be recorded.

Step 205: Join the waiting queue if the duration of entering the backoff state is greater than or equal to the out-of-order duration.

It may be understood that, before step 205 is performed, the duration of entering the backoff state needs to be calculated. Specifically, a current moment may be continuously obtained, and the duration of entering the backoff state is calculated based on the current moment and the timestamp of entering the backoff state. If the duration of entering the backoff state is greater than or equal to the out-of-order duration, join the waiting queue.

If the duration of entering the backoff state is less than the out-of-order duration, the foregoing operation is repeated, that is, the current moment is obtained again, and the duration of entering the backoff state is calculated again, until the duration of entering the backoff state is greater than or equal to the out-of-order duration.

Step 206: Detect the waiting queue if the duration of entering the backoff state is less than the out-of-order duration.

It should be noted that, when the duration of entering the backoff state is less than the out-of-order duration, in addition to calculating the duration of entering the backoff state again, the waiting queue may also be detected, to avoid a case in which the duration of entering the backoff state is less than the out-of-order duration but the waiting queue is empty. In this case, if the first thread is still in the backoff state, a waste of the lock resource is caused.

The waiting queue does not need to be detected each time after the duration of entering the backoff state is calculated. In other words, a quantity of times of detecting the waiting queue may be less than a quantity of times of calculating the duration of entering the backoff state. This avoids an additional latency caused by frequent detection operations.

Specifically, the waiting queue may be detected by using an exponential backoff check policy. That is, when the quantity of times of calculating the duration of entering the backoff state is an exponential multiple and the duration of entering the backoff state is less than the out-of-order duration, the waiting queue is detected; and when the quantity of times of calculating the duration of entering the backoff state is a non-exponent multiple, the waiting queue is not detected.

For example, after the duration of entering the backoff state is calculated for the first time, if the duration of entering the backoff state is less than the out-of-order duration, the waiting queue is detected; after the duration of entering the backoff state is calculated for the second time and the duration of entering the backoff state is less than the out-of-order duration, the waiting queue is detected; after the duration of entering the backoff state is calculated for the fourth time and the duration of entering the backoff state is less than the out-of-order duration, the waiting queue is detected; after the duration of entering the backoff state is calculated for the eighth time, and the duration of entering the backoff state is less than the out-of-order duration, the waiting queue is detected; and so on.

When the quantity of times of calculating the duration of entering the backoff state is a non-exponent multiple such as the third, fifth, or sixth time, the waiting queue is not detected.

Step 207: Join the waiting queue when the waiting queue is empty.

Step 207 is performed, so that the first thread may be prevented from being in the backoff state when the waiting queue is empty, to maximize use of the lock resource, and improve a throughput.

It should be noted that step 203 to step 207 constitute a specific implementation solution of step 102.

After the first operation is performed by using the first thread, a third operation (namely, step 208 to step 210) may be further performed by using the first thread.

Step 208: Set the value of the global variable to the second identifier, where the second identifier does not identify any code segment.

Based on the foregoing description, it may be learned that the plurality of code segments may be executed by using the first thread. When step 201 is performed, if step 208 is not performed, incorrect calculation of out-of-order duration may be caused in a process of running a next code segment by using the first thread.

For example, a next code segment of the first code segment does not have the latency requirement. If step 208 is not performed, the value of the global variable is still the first identifier. In this way, in the process of running the next code segment by using the first thread, the first duration corresponding to the first code segment is incorrectly used as the out-of-order duration.

Therefore, incorrect calculation of the out-of-order duration can be prevented by performing step 208.

It should be noted that step 208 is optional. Usually, when step 201 is performed, step 208 is performed.

It may be understood that the first duration is obtained based on the latency requirement, but the first duration may not be accurate enough. Therefore, after running the first code segment, the first duration may be adjusted. For example, because the first duration is obtained based on the latency requirement, the first duration may be adjusted based on the latency requirement by using a feedback mechanism. The following describes this by using step 209 and step 210.

Step 209: Obtain the actual running duration of the first code segment.

It may be learned from the foregoing description that, when the first operation is performed, the timestamp at which the first code segment starts to run is recorded. Based on this, step 209 may include: obtaining a timestamp at which the first code segment ends to run, and then calculating the actual running duration of the first code segment based on the timestamp at which the first code segment starts to run and the timestamp at which the first code segment ends to run.

Step 210: Adjust the first duration based on a comparison between the actual running duration and the target latency, where the target latency is a running latency that is of the first code segment and that is expected by a user.

In an implementation, step 210 includes: shortening the first duration when the actual running duration is greater than the target latency.

It should be noted that there are a plurality of methods for shortening the first duration. This is not specifically limited in this embodiment of this application. For example, the first duration may be shortened by half.

In an implementation, step 210 includes: extending the first duration if the actual running duration is less than the target latency.

It should be noted that there are a plurality of methods for extending the first duration. This is not specifically limited in this embodiment of this application. For example, an adjustment amplitude of one unit may be extended each time based on the first duration. To prevent the actual running duration from being greater than the target latency again after the first duration is extended, the adjustment amplitude of one unit is generally less than a shortening amplitude in a previous process of shortening the first duration.

For example, the adjustment amplitude may be (100-PCT)/PCT of the shortening amplitude in the previous process of shortening the first duration. The PCT is a tail latency indicator of the target latency. For example, if a set target latency is a P99 tail latency, the PCT is 99, and the adjustment amplitude is 1/99 of the shortening amplitude in the previous process of shortening the first duration.

A tail latency is a specific latency, and in all times of running of the first code segment, most running latencies are less than the specific latency. For example, the P99 tail latency is a latency that is greater than 99% of running latencies in all times of running of the first code segment.

Therefore, in this embodiment, once the actual running duration exceeds the set target latency, the first duration is shortened by half, and each subsequent increase is 1/99 of the shortening amplitude. If an execution status does not change, subsequent 99 adjustment latencies do not exceed the target latency.

The following describes a case in which the first code segment has no latency requirement. As shown in FIG. 5, an embodiment of this application provides a third embodiment of a method for obtaining a lock resource. The embodiment includes the following steps.

Step 401: Determine that a priority of a first core is lower than a priority of a second core.

Step 401 is similar to step 202. For details, refer to the foregoing related descriptions of step 202 to understand step 401.

Step 402: Obtain out-of-order duration.

In this embodiment, because the first code segment has no latency requirement, step 402 is different from step 203.

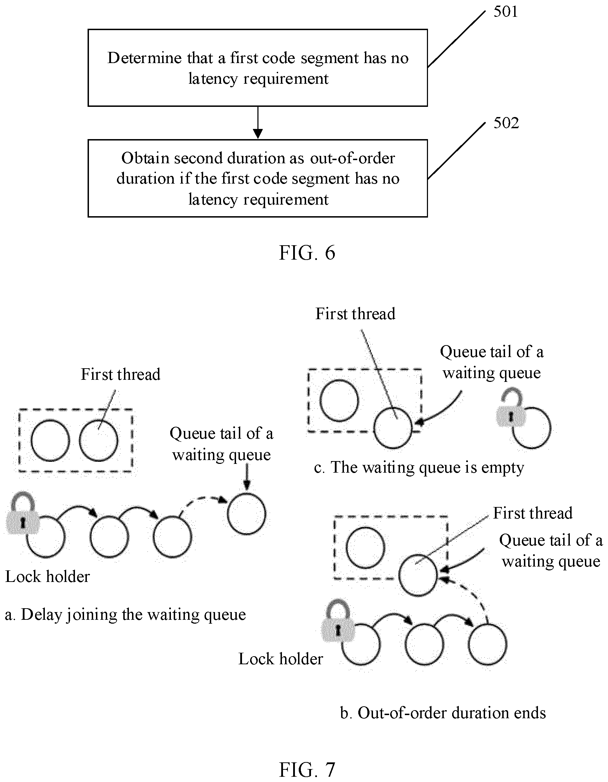

Specifically, in an implementation, as shown in FIG. 6, step 402 includes the following steps.

Step 501: Determine that the first code segment has no latency requirement.

There are a plurality of methods for determining that the first code segment has no latency requirement. This is not specifically limited in this embodiment of this application.

When step 201 is performed, step 501 may include:
if a value of a global variable is a second identifier, determining that the first code segment has no latency requirement, where the global variable represents a code segment having a latency requirement, and the second identifier does not identify any code segment.

Because the global variable is described above, details are not described herein again.

Step 502: Obtain second duration as the out-of-order duration if the first code segment has no latency requirement.

It should be noted that, because the first code segment has no latency requirement, theoretically, the out-of-order duration may be very long. However, to prevent the first thread from being continuously in a backoff state and consequently the first code segment cannot continue to run, in this embodiment, second duration with a limited length is used as the out-of-order duration.

However, because the first code segment has no latency requirement, the second duration is usually greater than first duration. Based on this, the second duration may also be referred to as maximum out-of-order duration.

In addition, the first duration may be dynamically adjusted based on the latency requirement. Different from the first duration, the second duration may be fixed.

Step 403: Enter, by a first thread, the backoff state when a waiting queue is not empty, where the backoff state is a state of waiting to join the waiting queue.

Step 403 is similar to step 204. For details, refer to the foregoing related descriptions of step 204 to understand step 403.

Step 404: Join the waiting queue if duration of entering the backoff state is greater than or equal to the out-of-order duration.

Step 404 is similar to step 205. For details, refer to the foregoing related descriptions of step 205 to understand step 404.

Step 405: Detect the waiting queue if the duration of entering the backoff state is less than the out-of-order duration.

Step 405 is similar to step 206. For details, refer to the foregoing related descriptions of step 206 to understand step 405.

Step 406: Join the waiting queue when the waiting queue is empty.

Step 406 is similar to step 207. For details, refer to the foregoing related descriptions of step 207 to understand step 406.

For ease of understanding, the following describes, with reference to FIG. 7, a process in which the first thread joins the waiting queue.

Specifically, the first thread determines that the priority of the first core is lower than the priority of the second core, and then enters the backoff state (that is, a. Delay joining the waiting queue shown in FIG. 7). After the first thread enters the backoff state, a second thread running on the second core joins a queue tail of the waiting queue, and a lock is sequentially transferred downward in the waiting queue by a holder of the lock, and finally transferred to the second thread.

After the out-of-order duration ends (shown by b in FIG. 7), or when the waiting queue is empty (shown by c in FIG. 7), the first thread joins the queue tail of the waiting queue, to obtain the lock.

The foregoing describes the method provided in embodiments of this application, and the following describes an application scenario of the method provided in embodiments of this application.

Specifically, the method provided in embodiments of this application may be applied to any application program, and there are a plurality of specific application manners.

For example, for a common application program, the method provided in embodiments of this application may be implemented by modifying code of the application program. For example, the application program includes a code segment, and the code segment includes lock code. The lock code in the code segment may be modified, so that a first thread performs the foregoing first operation in a process of running the modified lock code. In addition, corresponding code may be added before and after the lock code, so that the first thread performs the foregoing second operation in a process of running code before the lock code, and performs the foregoing third operation in a process of running code after the lock code.

It may be understood that a large quantity of code that modifies the application program brings about a large workload. To reduce a workload and enhance practicability of the method provided in embodiments of this application, the application program may be improved by using the following method.

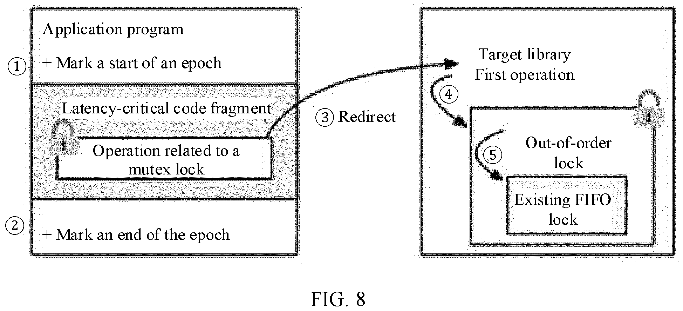

As shown in FIG. 8, the application program includes a latency-critical code fragment (namely, the first code segment described above). In this embodiment of this application, the latency-critical code fragment is referred to as an epoch. The latency-critical code fragment includes code related to a mutex lock. When the code related to the mutex lock is run, an operation related to the mutex lock is performed. The operation related to the mutex lock may include invoking a function pthread_mutex_lock. The function pthread_mutex_lock is used to enable a thread to obtain the mutex lock.

In order not to modify original code of the application program as much as possible, this embodiment of this application adds a target library. The target library includes the code related to the mutex lock. When the code related to the mutex lock in the target library is run, the operation related to the mutex lock is also executed. In addition, an operation related to the mutex lock executed when the latency-critical code fragment is run is redirected (marked by ③ in FIG. 8) to an operation related to the mutex lock (for example, the first operation) executed when the code related to the mutex lock in the target library is run. In this way, when the first thread invokes the function pthread_mutex_lock, the first operation (marked by ④ in FIG. 8) is automatically executed. The first operation is used to enable the first thread to obtain an out-of-order lock (marked by ⑤ in FIG. 8) provided in embodiments of this application. It may be learned based on the foregoing descriptions that the out-of-order lock is established based on an existing FIFO lock.

Redirection (Redirect) is to redirect various network requests to other locations by using various methods.

It can be seen that, when there is no latency requirement, for an existing application program, in this embodiment of this application, only one target library needs to be added, and an operation related to the mutex lock in the first code segment is redirected to an operation related to the mutex lock in the target library, without modifying code of the application program.

It may be learned from the foregoing descriptions that, if the first code segment has the latency requirement, the first thread further needs to perform the second operation before performing the first operation, and further needs to perform the third operation after performing the first operation.

A method for implementing the second operation and the third operation is as follows: An interface epoch_start (the interface marks a start of the epoch, and is marked by ① in FIG. 8) and an interface epoch_end (the interface marks an end of the epoch, and is marked by ② in FIG. 8) are added before the first code segment, and the target library further includes code invoked by using the interface epoch_star and code invoked by using the interface epoch_end. When the first thread invokes the interface epoch_star, the code in the target library is run to perform the foregoing second operation. When the first thread invokes the interface epoch_end, the code in the target library is run to perform the foregoing third operation.

It may be learned that, even if the first code segment has the latency requirement, only two interfaces need to be added to the code of the application program, and the code of the application program does not need to be modified too much, thereby reducing the workload.

It may be learned from the foregoing descriptions that, in a process of running the first code segment, the first thread performs the first operation, to obtain the out-of-order lock. It should be noted that, a quantity of out-of-order locks is not specifically limited in this embodiment of this application, and the quantity of out-of-order locks may be one or more. When there are a plurality of out-of-order locks, it means that the first thread needs to perform a plurality of first operations to acquire the plurality of out-of-order locks. The plurality of out-of-order locks may be different locks.

In addition, when there are a plurality of out-of-order locks, the plurality of out-of-order locks may be in a nested relationship, or may be associated by using a condition variable or an interface such as trylock.

It may be learned from the descriptions of the foregoing three embodiments that there are three cases in which the first thread joins a waiting queue. A first case is that a priority of a first core is higher than a priority of a second core. A second case is that the priority of the first core is lower than the priority of the second core, but the first code segment has the latency requirement. A third case is that the priority of the first core is lower than the priority of the second core, but the first code segment has no latency requirement.

Corresponding to the three cases, operations performed by the first thread are different. For ease of differentiation, a corresponding interface is set for each case in this embodiment of this application.

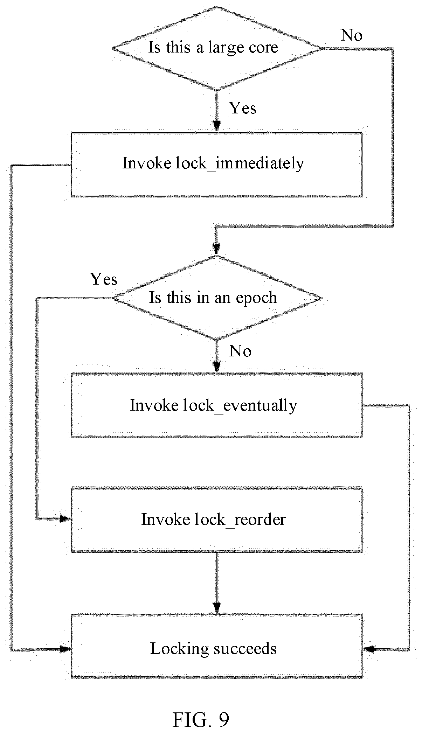

Specifically, as shown in FIG. 9, it is assumed that a plurality of cores of a computer device correspond to two priorities, and that the first thread joins a waiting queue includes:
The first thread first determines whether the first core is a large core (that is, whether the first core is a high priority).

If the first core is a large core (namely, the high priority), the first thread invokes an interface lock_immediately to directly join the waiting queue, and finally locking succeeds.

If the first core is not a big core (namely, a low priority), the first thread determines whether the first core is in the epoch (that is, determines whether there is a latency requirement).

If the first core is not a big core, and is in the epoch (that is, there is a latency requirement), the first thread invokes an interface ock_reorder, to join the waiting queue by performing step 203 to step 210, and finally locking succeeds.

If the first core is not a big core, and is not in the epoch (that is, there is a latency requirement), the first thread invokes an interface ock_eventually, to join the waiting queue by performing step 402 to step 40, and finally locking succeeds.

It may be understood that, in a process of obtaining a lock, the first thread needs to join the waiting queue first. The foregoing describes three cases in which the first thread joins the waiting queue. After obtaining the lock, the first thread executes a critical section. After executing the critical section, the first thread releases the lock. The following briefly describes a process of releasing the lock.

Based on the foregoing descriptions, it may be learned that the operation related to the mutex lock in the first code segment may include the function pthread_mutex_lock. The function pthread_mutex_lock is used to enable the thread to obtain the mutex lock. In addition, the operation related to the mutex lock in the first code segment may further include a function pthread_mutex_unlock. The function pthread_mutex_unlock is used to enable the thread to release the lock.

Because code related to the mutex lock in the first code segment is redirected to code related to the mutex lock in the target database, when the first thread invokes the function pthread_mutex_unlock, an operation of releasing the out-of-order lock in the target library is automatically executed. For the foregoing three cases of joining the waiting queue, operations of releasing the out-of-order lock are the same.

To reflect beneficial effects of the method provided in embodiments of this application, the applicant performs the following test.

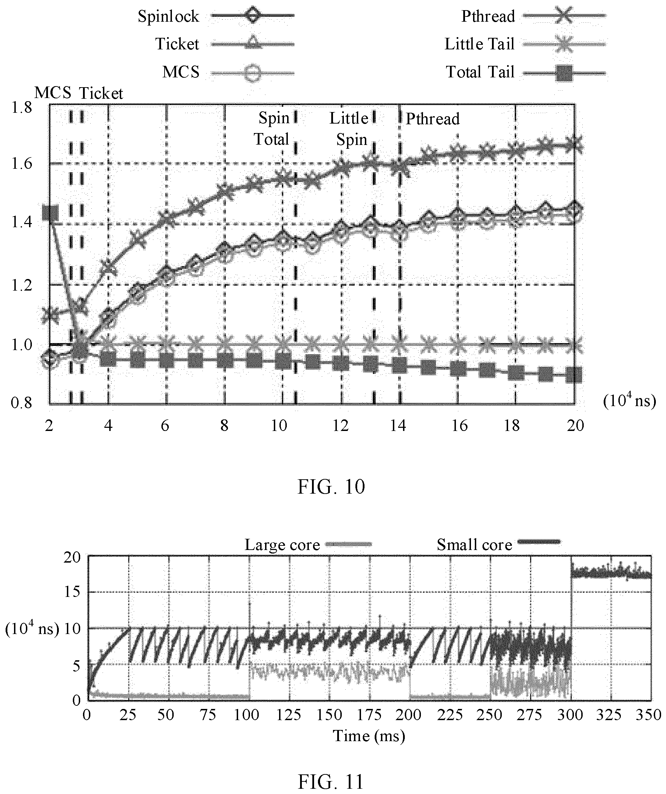

FIG. 10 shows ratios of a throughput rate using the target library (LibASL) to throughput rates using other locks (for example, a spinlock (Spinlock), a ticket (Ticket) lock, an MCS lock, and a Pthread mutex lock), and whether actual running duration of a code segment can reach a set target latency SLO, where a horizontal axis represents target latencies SLO with different settings, and a vertical axis represents the ratio of the throughput rates.

As shown in FIG. 10, when a set latency is 6*104 ns, and the target library (LibASL) is used, a throughput of the LibASL is 1.2 times a throughput of the spinlock (Spinlock) (that is, performance is improved by 20%). In addition, in this case, an actual tail latency (Total Tail) of all cores is 0.948 times the set SLO (6*104 ns), and a tail latency of the small core is 1.002 times the set SLO (6*104 ns) (not shown in FIG. 10).

In addition, FIG. 10 further uses vertical dashed lines to represent latencies when the other locks are used. For example, when the spinlock is used, a tail latency (Spin Total) of all cores is 10.4*104 ns, and the tail latency (Spin Little) of the small core is 13.1*104 ns.

It may be learned that when a proper SLO is set, a tail latency of the LibASL (regardless of the tail latency of the small core or the tail latency of all cores) can be ensured (that is, less than the SLO). In terms of the throughput, compared with the ticket (Ticket) lock, the MCS lock, and the Pthread mutex lock, the LibASL can increase the throughput by 40% to 66% while ensuring that the target latency is met. Compared with the spinlock, the LibASL can improve the throughput by 40% with the same tail latency of the small core.

Figure 11 shows a latency of each epoch in 350 ms when the test starts. In the figure, a horizontal axis represents a time axis from 0 ms to 350 ms, and a vertical axis represents the latency of the epoch. A horizontal solid line (10*104 ns) in the figure represents a length of a currently set latency SLO. In the test, an epoch length is increased by eight times at 100 ms (namely, time required for execution), the epoch length is restored to an initial length at 200 ms, the epoch length frequently changes at 250 ms, and finally the epoch length is increased by 128 times at 300 ms. Red and green points in the figure respectively represent execution latencies of all epochs on a small core and a large core.

It can be seen from FIG. 11 that, from 0 ms to 25 ms, out-of-order duration on the small core gradually increases. Consequently, a latency gradually increases, and finally reaches a length approximate to that of the SLO at 25 ms. In this case, a latency on the large core gradually reduces. From 25 ms to 100 ms, reciprocal adjustments are made to a length of the out-of-order duration, to ensure that the latency fluctuates within an allowed range of the SLO. When the epoch length is increased by eight times at 100 ms, the LibASL can quickly adapt to the new epoch length, reduce the length of the out-of-order duration, and ensure that an epoch latency is within a range of the set SLO. Similarly, when the epoch length is restored at 200 ms, the LibASL can also quickly adjust the length of out-of-order duration to maximize the throughput rate. When the epoch length starts to fluctuate frequently at 250 ms, the LibASL can also ensure that the latency is within the SLO. Finally at 300 ms, the epoch length is increased by 128 times. As a result, the set SLO cannot be ensured. Therefore, LibASL is not used in this case, to ensure that the latencies on all cores are the same as much as possible. Therefore, it can be seen from FIG. 11 that in this case, latencies on the large core and the small core are the same.

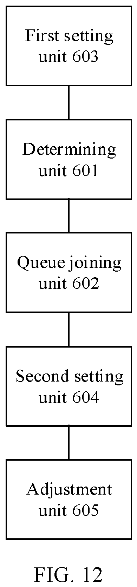

As shown in FIG. 12, an embodiment of this application further provides an apparatus for obtaining a lock resource, applied to a computer device, where a processor of the computer device includes a first core and a second core. The apparatus includes: A determining unit 601 is configured to determine that a priority of the first core is lower than a priority of the second core; and a queue joining unit 602 is configured to delay joining a waiting queue when the waiting queue is not empty, so that a second thread running on the second core joins the waiting queue before a first thread, where the waiting queue is used to contend for the lock resource.

In an implementation, if performance of the second core is better than performance of the first core, the determining unit 601 is configured to determine that the priority of the first core is lower than the priority of the second core

In an implementation, the queue joining unit 602 is configured to: enter, by the first thread, a backoff state when the waiting queue is not empty, where the backoff state is a state of waiting to join the waiting queue; and join the waiting queue if duration of entering the backoff state is greater than or equal to out-of-order duration.

In an implementation, the queue joining unit 602 is configured to obtain the out-of-order duration.

In an implementation, the queue joining unit 602 is configured to obtain first duration corresponding to the first code segment as the out-of-order duration if the first code segment has a latency requirement, where the first duration is obtained based on the latency requirement.

In an implementation, the apparatus further includes: A first setting unit 603 is configured to set a value of a global variable to a first identifier of the first code segment, where the global variable represents a code segment having a latency requirement; and if the value of the global variable is the first identifier, the queue joining unit 602 is further configured to determine that the first code segment has the latency requirement.

In an implementation, the apparatus further includes: A second setting unit 604 is configured to set the value of the global variable to a second identifier, where the second identifier does not identify any code segment.

In an implementation, the apparatus further includes: An adjustment unit 605 is configured to: obtain actual running duration of the first code segment; and adjust the first duration based on a comparison between the actual running duration and a target latency specified by the latency requirement.

In an implementation, the adjustment unit 605 is configured to shorten the first duration if the actual running duration is greater than the target latency.

In an implementation, the adjustment unit 605 is configured to extend the first duration if the actual running duration is less than the target latency.

In an implementation, the queue joining unit 602 is configured to obtain second duration as the out-of-order duration if the first code segment has no latency requirement.

In an implementation, if a value of a global variable is a second identifier, the queue joining unit 602 is configured to determine that the first code segment has no latency requirement, where the global variable represents a code segment having a latency requirement, and the second identifier does not identify any code segment.

In an implementation, the queue joining unit 602 is configured to: detect the waiting queue if the duration of entering the backoff state is less than the out-of-order duration; and join the waiting queue when the waiting queue is empty.

In an implementation, the queue joining unit 602 is configured to join the waiting queue when the waiting queue is empty.

For specific implementations, related descriptions, and technical effects of the foregoing units, refer to the descriptions of the foregoing method parts.

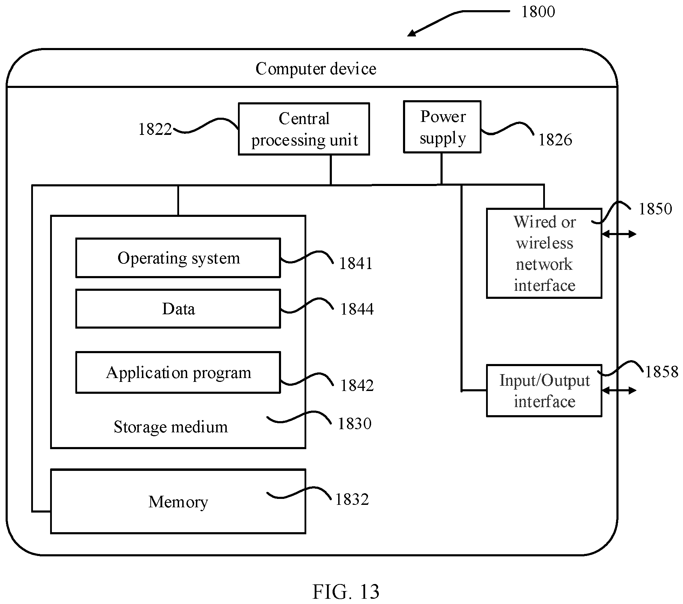

FIG. 13 is a schematic diagram of a structure of a computer device according to an embodiment of this application. The computer device is configured to implement a function of the apparatus for obtaining the lock resource in the embodiment corresponding to FIG. 11. Specifically, a computer device 1800 is implemented by one or more servers. The computer device 1800 may have a large difference due to different configurations or performance, and may include one or more central processing units (central processing units, CPUs) 1822 (for example, one or more processors) and memories 1832, and one or more storage media 1830 (for example, one or more mass storage devices) that stores an application program 1842 or data 1844. The memory 1832 and the storage medium 1830 may perform transitory storage or persistent storage. The program stored in the storage medium 1830 may include one or more modules (not shown in the figure), and each module may include a series of instruction operations for the computer device. Further, the central processing unit 1822 may be set to communicate with the storage medium 1830, to perform, in the computer device 1800, a series of instruction operations in the storage medium 1830.

The computer device 1800 may further include one or more power supplies 1826, one or more wired or wireless network interfaces 1850, one or more input/output interfaces 1858, and/or one or more operating systems 1841, such as Windows ServerTM, Mac OS XTM, UnixTM, LinuxTM, FreeBSDTM, or the like.

In this embodiment of this application, the central processing unit 1822 may be configured to perform the method for obtaining the lock resource that is performed by the apparatus for obtaining the lock resource in the embodiment corresponding to FIG. 11. Specifically, the central processing unit 1822 may be configured to:
run the first code segment by using a first thread running on the first core, to perform the following first operation:
determining that the priority of the first core is lower than the priority of the second core; and
delaying joining the waiting queue when the waiting queue is not empty, so that the second thread running on the second core joins the waiting queue before the first thread, where the waiting queue is used to contend for the lock resource.

An embodiment of this application further provides a chip, including one or more processors. Some or all of the processors are configured to read and execute a computer program stored in a memory, to perform the methods in the foregoing embodiments.

Optionally, the chip includes the memory, and the memory is connected to the processor by using a circuit or a wire. Further, optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method by using dedicated hardware. For example, processing related to a neural network model may be implemented by a dedicated neural network processor or graphics processing unit.

The method provided in embodiments of this application may be implemented by one chip, or may be cooperatively implemented by a plurality of chips.

An embodiment of this application further provides a computer storage medium. The computer storage medium is configured to store computer software instructions used by the foregoing computer device, and the computer software instructions include a program designed for execution by the computer device.

The computer device may be the apparatus for obtaining the lock resource in the embodiment corresponding to FIG. 11.

An embodiment of this application further provides a computer program product. The computer program product includes computer software instructions, and the computer software instructions may be loaded by a processor to implement the procedures in the methods shown in the foregoing embodiments.

It may be clearly understood by a person skilled in the art that, for ease and brevity of description, for a detailed working process of the foregoing system, apparatus, and units, refer to a corresponding process in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. A part of or all the units may be selected based on an actual requirement to implement objectives of the solutions in this embodiment.

In addition, functional units in embodiments of this application may be integrated into one processing unit. Each of the units may alternatively exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or a part contributing to the conventional technology, or all or a part of the technical solutions may be implemented in a form of a software product. The computer software product is stored in a storage medium and includes a plurality of instructions for enabling a computer device (which may be a personal computer, a server, a network device, or the like) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A method for obtaining a lock resource, applied to a computer device, wherein a processor of the computer device comprises a first core and a second core; and
the method comprises:
running a first code segment by using a first thread running on the first core, to perform the following first operation:
determining that a priority of the first core is lower than a priority of the second core; and
delaying joining a waiting queue when the waiting queue is not empty, so that a second thread running on the second core joins the waiting queue before the first thread, wherein the waiting queue is used to contend for the lock resource

2. The method according to claim 1, wherein the determining that a priority of the first core is lower than a priority of the second core comprises:
if performance of the second core is better than performance of the first core, determining that the priority of the first core is lower than the priority of the second core.

3. The method according to claim 1 or 2, wherein the delaying joining a waiting queue when the waiting queue is not empty comprises:
entering, by the first thread, a backoff state when the waiting queue is not empty, wherein the backoff state is a state of waiting to join the waiting queue; and
joining the waiting queue if duration of entering the backoff state is greater than or equal to out-of-order duration.

4. The method according to claim 3, wherein the first operation further comprises:
obtaining the out-of-order duration.

5. The method according to claim 4, wherein the obtaining the out-of-order duration comprises:
obtaining first duration corresponding to the first code segment as the out-of-order duration if the first code segment has a latency requirement, wherein the first duration is obtained based on the latency requirement.

6. The method according to claim 5, wherein the method further comprises:
before running the first code segment, performing the following second operation by using the first thread:
setting a value of a global variable to a first identifier of the first code segment, wherein the global variable represents a code segment having a latency requirement; and
before the using first duration corresponding to the first code segment as the out-of-order duration if the first code segment has a latency requirement, the first operation further comprises:
if the value of the global variable is the first identifier, determining that the first code segment has the latency requirement.

7. The method according to claim 6, wherein the method further comprises:
after running the first code segment, performing the following third operation by using the first thread:
setting the value of the global variable to a second identifier, wherein the second identifier does not identify any code segment.

8. The method according to claim 5 or 6, wherein the method further comprises:
after running the first code segment, performing the following third operation by using the first thread:
obtaining actual running duration of the first code segment; and
adjusting the first duration based on a comparison between the actual running duration and a target latency specified by the latency requirement.

9. The method according to claim 8, wherein the adjusting the first duration based on a comparison between the actual running duration and a target latency comprises:
shortening the first duration if the actual running duration is greater than the target latency.

10. The method according to claim 8, wherein the adjusting the first duration based on a comparison between the actual running duration and a target latency comprises:
extending the first duration if the actual running duration is less than the target latency.

11. The method according to claim 4, wherein the obtaining the out-of-order duration comprises:
obtaining second duration as the out-of-order duration if the first code segment has no latency requirement.

12. The method according to claim 11, wherein after the obtaining second duration as the out-of-order duration if the first code segment has no latency requirement, the first operation further comprises:
if a value of a global variable is a second identifier, determining that the first code segment has no latency requirement, wherein the global variable represents a code segment having a latency requirement, and the second identifier does not identify any code segment.

13. The method according to claim 3, wherein the delaying joining a waiting queue when the waiting queue is not empty further comprises:
detecting the waiting queue if the duration of entering the backoff state is less than the out-of-order duration; and
joining the waiting queue when the waiting queue is empty.

14. The method according to any one of claims 1 to 12, wherein after the determining that a priority of the first core is lower than that of the second core, the first operation further comprises:
joining the waiting queue when the waiting queue is empty.

15. An apparatus for obtaining a lock resource, applied to a computer device, wherein a processor of the computer device comprises a first core and a second core; and
the apparatus comprises:
a determining unit, configured to determine that a priority of the first core is lower than a priority of the second core; and
a queue joining unit, configured to delay joining a waiting queue when the waiting queue is not empty, so that a second thread running on the second core joins the waiting queue before a first thread, wherein the waiting queue is used to contend for the lock resource.

16. A computer device, comprising a memory and a processor, wherein the memory is configured to store computer-readable instructions, and the processor is configured to read the computer-readable instructions and implement the method according to any one of claims 1 to 14.

17. A computer storage medium, wherein the computer storage medium stores computer-readable instructions; and when the computer-readable instructions are executed by a processor, the method according to any one of claims 1 to 14 is implemented.

18. A computer program product, wherein the computer program product stores computer-readable instructions; and when the computer-readable instructions are executed by a processor, the method according to any one of claims 1 to 14 is implemented.
